# NEUE EUROPÄISCHE PATENTSCHRIFT

(11) **EP 1 795 408 B2**
(45) Veröffentlichungstag und Bekanntmachung des Hinweises auf die Entscheidung über den Einspruch: **03.05.2023**
(45) Hinweis auf die Patenterteilung: 18.01.2012
(21) Anmeldenummer: 06025309.3
(22) Anmeldetag: 07.12.2006
(51) Int. Cl.: B60S 3/06

(54) **Behandlungsanlage für Fahrzeuge**
Treatment plant for vehicles
Installation de traitement pour véhicules

(30) Priorität: 08.12.2005 DE 202005019329 U
(43) Veröffentlichungstag der Anmeldung: 13.06.2007
(73) Patentinhaber: Otto Christ AG, 87734 Benningen (DE)
(72) Erfinder: Christ, Markus, 87700 Memmingen (DE)
(74) Vertreter: Ernicke, Klaus Stefan

(56) Entgegenhaltungen:
- EP-A- 0 987 156
- DE-A1- 3 825 346
- JP-A- H07 165 025
- JP-A- H11 263 200
- JP-A- 2000 198 425

## Beschreibung

Die Erfindung betrifft eine Behandlungsanlage für Fahrzeuge, insbesondere eine Autowaschanlage oder Polieranlage, mit den Merkmalen im oberbegriff des Hauptanspruchs.

Derartige Autowasch- oder Polieranlagen sind aus der Praxis bekannt. Sie weisen ein oder mehrere drehend angetriebene Behandlungsbürsten auf, insbesondere horizontale Dach- und vertikale Seitenbürsten, die mittels einer Zustellvorrichtung in die Arbeitsposition am Fahrzeug zugestellt und ggf. auch entlang des Fahrzeugs bewegt werden. Für den Drehantrieb werden in der Praxis schützgesteuerte Elektromotoren mit einem vorgeschalteten Untersetzungsgetriebe benutzt, welches die Motordrehzahl auf die jeweils benötigte Bürstendrehzahl reduziert. Je nach Art des Bürstenbesatzes sind unterschiedliche Drehzahlen und dementsprechend unterschiedliche Vorschaltgetriebe erforderlich. Um das Vorschaltgetriebe und die Bürstenführungen bei einer Drehrichtungsänderung vor allzu großen Belastungen zu schütze, sind bei konventionellen Anlagen die elektrischen Antriebsmotoren als sogenannte Sanftanläufer ausgebildet.

Die Zustellung der Behandlungsbürsten erfolgt mittels einer Momentensteuerung, mit der die Eintauchtiefe bzw. der Anpressdruck der Bürste am Fahrzeug über die Stromaufnahme des Motors gemessen und zur Steuerung der Zustellbewegung herangezogen wird. Hierfür ist bei den konventionellen Anlagen und Bürstenantrieben eine Messeinrichtung für den Motorstrom in Form einer separaten Elektronikbaugruppe vorhanden. Die konventionelle Antriebstechnik ist daher relativ unflexibel und bauaufwändig.

Aus der DE 38 35 346 A1 ist eine Autowaschanlage mit einem fahrbaren Portal und einer Hubeinrichtung für eine horizontale Dachbürste bekannt, wobei der Fahrantrieb für das Portal und die Hubeinrichtung für die Dachbürste regelbare Antriebe aufweisen, die aus einem Drehstrommotor mit einem Frequenzumformer bestehen. Hierüber wird die Dachbürste regelbar in horizontal- und vertikaler Richtung verwahren.

Die EP 0 987 156 A2 befasst sich mit einer Doppelportal-Waschanlage, bei der die beiden Portale synchronisiert werden können und einen einstellbaren Abstand zueinander haben. Die Portal haben zu diesem Zweck steuer- und regelbare Fahrantriebe.

Es ist Aufgabe der vorliegenden Erfindung, eine bessere Antriebstechnik für die Behandlungsbürsten aufzuzeigen.

Die Erfindung löst diese Aufgabe mit den Merkmalen im Hauptanspruch. Die Ausrüstung der elektrischen Drehantriebsmotoren mit einem Frequenzumrichter hat den Vorteil, dass kostengünstige und robuste Wechselstrommotoren eingesetzt werden können. Deren Drehzahl kann über den Frequenzumrichter gesteuert und auf den gewünschten Wert eingestellt werden. Dies erlaubt eine feinfühlige und ggf. stufenlose Drehzahleinstellung während des Behandlungsprozesses und somit eine optimale Anpassung an die jeweiligen Prozesserfordernisse und an das Fahrzeug. Außerdem können je nach Bürstenbesatz unterschiedliche Drehzahlen oder Drehzahlbereiche eingestellt werden.

Der Antriebsmotor mit Frequenzumrichter ermöglicht ferner den Entfall des bisher erforderlichen Untersetzungsgetriebes, so dass der Antriebsmotor als Direktantrieb fungieren kann. Dies bringt eine wesentliche Kostenersparnis mit sich. Außerdem können die Anlaufeigenschaften, des Antriebsmotors über den Frequenzumrichter gesteuert werden, so dass die bisher erforderliche separate Schaltungselektronik für den Sanftanläufer entfallen kann.

Im Frequenzumrichter findet über eine integrierte Messeinrichtung bereits für die Motoransteuerung eine Messung der Stromaufnahme des Antriebsmotors statt. Diese ohnehin vorhandene Messeinrichtung wird auch für die Momentensteuerung der Bürstenzustellung verwendet und braucht nur entsprechend signaltechnisch mit der Anlagensteuerung verbunden zu werden. Eine separate Messeinrichtung ist entbehrlich. Insbesondere lassen sich die integrierten Messeinrichtungen mehrerer Frequenzumrichter über ein Bussystem mit der Steuerung der Behandlungsanlage verbinden und gemeinsam ansteuern. Durch den Frequenzumrichter entfallen außerdem die bisher üblichen Schütze und Motorschutzschalter.

In den Unteransprüchen sind weitere vorteilhafte Ausgestaltungen der Erfindung angegeben.

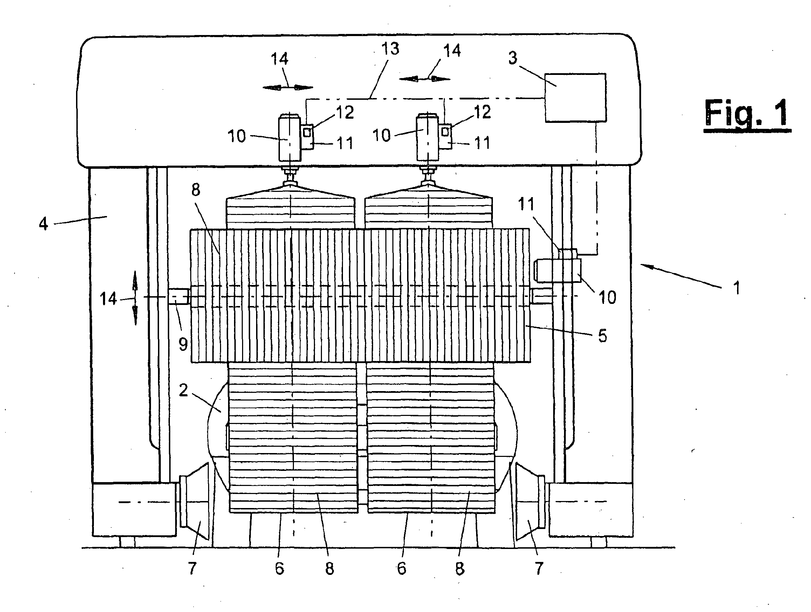

Die Erfindung ist in der Zeichnung Figur 1 beispielsweise und schematisch dargestellt. Sie zeigt eine Portalwaschanlage in Stirnansicht mit mehreren Waschbürsten und Antriebsmotoren mit Frequenzumrichtern.

Die Erfindung betrifft eine Behandlungsanlage (1) für Fahrzeuge (2), insbesondere eine Autowaschanlage oder eine Polieranlage, die mit ein oder mehreren rotierend angetriebenen Behandlungsbürsten (5,6,7) ausgerüstet ist. Die Erfindung betrifft ferner die Drehantriebstechnik für die Behandlungsbürsten (5,6,7).

Die in Figur 1 gezeigte Behandlungsanlage (1) ist z.B. als Portalwaschanlage ausgebildet, bei der das mit den Waschbürsten (5,6,7) bestückte Portal (4) beim Waschprozess relativ zum stehenden Fahrzeug (2) bewegt wird. Statt einem einzelnen Portal (4) können auch mehrere Portale hintereinander in Form einer sogenannten Doppel- oder Mehrfachportalanlage vorhanden sein. Ferner ist es möglich, mehrere Portale mit Abstand hintereinander als sog. Taktanlage auszubilden, wobei das Fahrzeug mit Eigenantrieb von einer Station zur nächsten fährt. Ferner ist eine Variante der Behandlungsanlage (1) in Form einer Autowaschstraße möglich, auf die am Ende der Beschreibung eingegangen wird.

Bei der gezeigten Portalwaschanlage (1) ist im Portal (4), vorzugsweise an den Portalständern, eine horizontale Waschbürste (5) oder eine sogenannte Dachbürste über vertikale oder schräge Schienen mittels einer durch Pfeile symbolisierten Zustellvorrichtung (14) höhenverstellbar gelagert. Ferner sind zwei oder mehr vertikale und im Querjoch des Portals (4) hängend gelagerte Seitenbürsten (6) vorhanden, welche im Portal (4) mittels Zustellvorrichtungen (14) seitenbeweglich gelagert sind. Die Portalwaschanlage (1) kann ferner noch Radwaschbürsten (7) aufweisen. Die genannten Bürstenanordnungen können mehrfach vorhanden sein.

Die Dach- und Seitenbürsten (5,6) besitzen jeweils ein horizontales bzw. vertikales Tragrohr (9) mit einem darauf angebrachten Bürstenbesatz (8). Die Behandlungsbürsten (5,6) rotieren um ihre Längsachse bzw. Tragrohrachse.

Die Behandlungsbürsten (5,6,7) werden von einem Drehantrieb und ggf. von einem Zustellantrieb bewegt. Der Drehantrieb weist einen elektrischen Antriebsmotor (10) auf, der die Behandlungsbürste (5,6,7) in Drehung versetzt und rotierend angetreibt. Bei der Dachbürste (5) und/oder den Seitenbürsten (6) ist der Antriebsmotor (10) des Drehantriebs als steuerbarer Wechselstrommotor, ausgebildet und mit einem mitgeführten oder stationär angeordneten Frequenzumrichter (11) ausgerüstet, über den der Wechselstrommotor angesteuert wird. Vorzugsweise ist der Wechselstrommotor als Drehstrommotor, insbesondere als Asynchronmotor ausgebildet und treibt ohne Untersetzungsgetriebe die zugeordnete Behandlungsbürste (5,6) direkt an. Der Antriebsmotor (10) kann hierbei direkt oder über eine Transmission oder Umlenkung auf das Tragrohr (9) einwirken. Die vorbeschriebene Antriebsausbildung kann auch bei den Radwaschbürsten (7) vorhanden sein.

Der Frequenzumrichter (11) kann eine integrierte Messeinrichtung (12) für den Motorstrom bzw. die Stromaufnahme des Antriebsmotors (10) aufweisen. Der Frequenzumrichter (11) kann von beliebig geeigneter Bauart sein. Der Frequenzumrichter (11) bzw. die integrierte Messeinrichtung (12) sind mit einer Steuerung (3) der Behandlungsanlage (1) über Leitungen (13) verbunden. Vorzugsweise sind die Leitungen (13) als Bussystem ausgebildet, über das mehrere Frequenzumrichter (11) gemeinsam an der Steuerung (3) angeschlossen sind. Über den Bus können sowohl die Messsignale der Messeinrichtung (12) und sonstige Signale des Frequenzumrichters (11), z.B. Zustandsmeldungen, Quittungssignale etc., an die Steuerung (3) übermittelt werden, als auch im Gegenzug die Steuersignale von der Steuerung (3) an die Frequenzumrichter (11) geschickt werden. Mittels dieser Steuersignale können von der Steuerung (3) die Antriebsmotoren (10) ein- und ausgeschaltet, in der Drehrichtung umgeschaltet sowie in ihrer Drehzahl eingestellt und ggf. verändert werden.

Der Frequenzumrichter (11) kann selbst programmierbar sein und auch eine Regelung beinhalten. Hierüber können z.B. die Motordrehzahl oder das Drehmoment auf den gewünschten Wert gesteuert oder geregelt werden. Die Steuerung (3) übermittelt in diesem Fall vor allem Ablaufsteuersignale und ggf. auch Steuersignale zum ggf. prozessabhängigen Einstellen der gewünschten Drehzahl und der Drehrichtung. Das Anlaufverhalten des Antriebsmotors (10) und auch sein Verhalten beim Bremsen, beim Drehrichtungswechsel und beim erneuten Hochlaufen können im Frequenzumrichter (11) programmiert sein oder von der Steuerung (3) vorgegeben werden. Die Steuerung (3) kann auch komplexere Steuerungs- und Regelungsaufgaben für das Betriebsverhalten des Antriebsmotors (10) übernehmen, wobei diese Funktionen vom Frequenzumrichter (11) zur Steuerung (3) hin verlagert werden.

Die Zustelleinrichtungen (14) sind mit geeigneten Antrieben (nicht dargestellt) ausgerüstet, welche ebenfalls mit der Steuerung (3) verbunden sind. Die Steuerung (3) kann eine Schaltung zur momentenabhängigen Zustellung der Behandlungsbürsten (5,6,7) aufweisen, in welcher die Messsignale der Messeinrichtung (11) des Motorstroms der Bürstenantriebe verarbeitet werden. Der Motorstrom repräsentiert das Drehmoment der Antriebsmotoren (10), welches wiederum eine Referenz für die Eintauchtiefe oder den Anpressdruck der Behandlungsbürsten (5,6,7) darstellt. Von der Steuerung (3) werden das Antriebsmoment bzw. die Eintauchtiefe auf einen voreingestellten Wert gesteuert und geregelt bzw. im wesentlichen konstant gehalten.

Von der Steuerung (3) werden die Drehzahl und die Drehrichtung der Antriebsmotoren (10) in einer prozessabhängigen Weise gesteuert. Die eingestellte Drehzahl bzw. der Drehzahlbereich können an den jeweiligen Bürstenbesatz (8) angepasst werden. Ein Bürstenbesatz (8) aus Polyethylen-Borsten oder aus geschlossenporigen Polyethylen-Schaumstoffstreifen kann z.B. auf eine Drehzahl von ca. 120 U/min eingestellt werden. Für einen Bürstenbesatz (8) aus einem textilen Material kann ein Drehzahlbereich von 80 bis 100 U/min vorteilhaft sein.

Die Möglichkeit zur stufenlosen Drehzahländerung der Behandlungsbürsten (5,6,7) über den Frequenzumrichter (11) und den Antriebsmotor (10) erlaubt eine optimale Anpassung der Behandlungsbürsten (5,6,7) an das Fahrzeug (2) und an die jeweiligen Prozesserfordernisse.

Die Bürstendrehzahl kann außerdem nach anderen Kriterien und insbesondere während des Behandlungsprozesses, insbesondere Waschprozesses, eingestellt und verändert werden. Eine Anpassung ist z.B. an die Relativgeschwindigkeit zwischen dem Portal (4) und dem Fahrzeug (2) möglich. Dies ist die Geschwindigkeit, mit der die Behandlungsbürsten (5,6) entlang des Fahrzeugs (2) bewegt werden. Diese Relativgeschwindigkeit kann verändert werden, z.B. in Anpassung an unterschiedliche Auslastungen der Behandlungsanlage (1) und dementsprechend verkürzte oder verlängerte Prozesszeiten. Außerdem kann die Relativgeschwindigkeit sich in Abhängigkeit von der jeweils beaufschlagten Fahrzeugkontur ändern. Die Drehgeschwindigkeit oder Drehzahl der Behandlungsbürsten (5,6) kann entsprechend mitgeführt werden.

Die vorbeschriebenen Ausgestaltungen und Funktionen gelten in entsprechender Weise auch für andere Ausführungsformen der Behandlungsanlage (1). Bei einer Ausführung als Waschstraße werden die Fahrzeuge (2) von einer Kette oder einem anderen Schleppmittel relativ zu ein oder mehreren stehenden oder ggf. ein Stück mitbewegten Portalen (4) mitbewegt. Die Bürstenbestückung der Portale (4) kann variieren, wobei z.B. die Dachbürste (5) und die Seitenbürsten (6) in unterschiedlichen Portalen untergebracht sind. Die Antriebstechnik ist ansonsten die gleiche wie im vorbeschriebenen Ausführungsbeispiel. Entsprechendes gilt auch für eine Ausgestaltung der Behandlungsanlage (1) als Polieranlage.

Abwandlungen der gezeigten und beschriebenen Ausführungsformen sind in verschiedener Weise möglich. Dies betrifft die Ausgestaltung der Behandlungsbürsten (5,6) und ihre Anordnung im Portal (4). Anstelle eines Portals (4) kann auch eine andere Trägereinheit für die Behandlungsbürsten (5,6,7) und ihre Antriebsmotoren (10) vorhanden sein. Auf eine angetriebene und gesteuerte Zustelleinrichtung (10) kann verzichtet werden, wenn die Behandlungsbürsten (5,6) eigenständig ausweichfähig angeordnet sind und durch ihr Eigengewicht oder das Bürstendrehmoment an das Fahrzeug (2) zugestellt werden.

### BEZUGSZEICHENLISTE

- 1: Behandlungsanlage, Autowaschanlage
- 2: Fahrzeug
- 3: Steuerung
- 4: Portal
- 5: Behandlungsbürste, Waschbürste, Dachbürste
- 6: Behandlungsbürste, Waschbürste, Seitenbürste
- 7: Behandlungsbürste, Waschbürste, Radwaschbürste
- 8: Bürstenbesatz
- 9: Tragrohr
- 10: Antriebsmotor
- 11: Frequenzumrichter
- 12: Messeinrichtung
- 13: Leitung, Bussystem
- 14: Zustellvorrichtung

## Patentansprüche

1. Behandlungsanlage für Fahrzeuge (2), insbesondere Autowaschanlage oder Polieranlage, mit mindestens einer zustellbaren rotierenden Behandlungsbürste (5,6,7), die mittels einer Zustellvorrichtung (14) in die Arbeitsposition am Fahrzeug (2) zugestellt wird, und mit einem elektrischen Antriebsmotor (10) für den Drehantrieb der Behandlungsbürste (5,6,7), **dadurch gekennzeichnet , dass** der Antriebsmotor (10) der Behandlungsbürste (5,6,7) als steuerbarer Wechselstrommotor mit einem Frequenzumrichter (11) ausgebildet ist, wobei der Frequenzumrichter (11) eine integrierte Messeinrichtung (12) für den Motorstrom aufweist, die für eine Momentensteuerung der Bürstenzustellung mit einer Steuerung (3) der Behandlungsanlage (1) verbunden ist.

2. Behandlungsanlage nach Anspruch 1, **dadurch gekennzeichnet, dass** die Steuerung (3) eine Schaltung zur momentenabhängigen Zustellung der Behandlungsbürste(n) (5,6,7) aufweist.

3. Behandlungsanlage nach einem der vorhergehenden Ansprüche, **dadurch gekennzeichnet, dass** der Antriebsmotor (10) der Behandlungsbürste (5,6,7) als steuerbarer Drehstrommotor, insbesondere als Asynchronmotor ausgebildet ist.

4. Behandlungsanlage nach einem der vorhergehenden Ansprüche, **dadurch gekennzeichnet, dass** der Antriebsmotor (10) als getriebeloser Wechselstrommotor für einen Direktantrieb der Behandlungsbürste (5,6,7) ausgebildet ist.

5. Behandlungsanlage nach einem der vorhergehenden Ansprüche, **dadurch gekennzeichnet, dass** die integrierten Messeinrichtungen (12) von mehreren Frequenzumrichtern (11) über ein Bussystem (13) mit der Steuerung (3) verbunden sind.

6. Behandlungsanlage nach einem der vorhergehenden Ansprüche, **dadurch gekennzeichnet, dass** der Antriebsmotor (10) in Abhängigkeit vom Bürstenbesatz (8) auf unterschiedliche Drehzahlen oder Drehzahlbereiche einstellbar ist.

7. Behandlungsanlage nach einem der vorhergehenden Ansprüche, **dadurch gekennzeichnet, dass** die Drehzahl des Antriebsmotors (10) während des Behandlungsprozesses veränderbar ist.

8. Behandlungsanlage nach einem der vorhergehenden Ansprüche, **dadurch gekennzeichnet, dass** die Behandlungsbürste (5,6,7) eine steuerbare und mit der Steuerung (3) verbundene Zustellvorrichtung (14) aufweist.

9. Behandlungsanlage nach einem der vorhergehenden Ansprüche, **dadurch gekennzeichnet, dass** die Behandlungsanlage (1) als Portalwaschanlage oder Taktanlage mit mindestens einem fahrbaren Portal (4) ausgebildet ist, an dem mehrere Behandlungsbürsten (5,6,7) mit Antriebsmotoren (10) und Zustellvorrichtungen (14) angeordnet sind.

10. Behandlungsanlage nach einem der Ansprüche 1 bis 8, **dadurch gekennzeichnet , dass** die Behandlungsanlage (1) als Waschstrasse mit mindestens einem stationären und/oder fahrbaren Portal (4) ausgebildet ist, an dem mindestens eine Behandlungsbürste (5,6,7) mit Antriebsmotor (10) und Zustellvorrichtung (14) angeordnet ist.

## Claims

1. Treatment installation for vehicles (2), in particular car-washing installation or polishing installation, having at least one feedable rotating treatment brush (5, 6, 7) which is fed into the working position on the vehicle (2) by means of a feed apparatus (14) and has an electric drive motor (10) for driving the treatment brush (5, 6, 7) in rotation, **characterized in that** the drive motor (10) of the treatment brush (5, 6, 7) is in the form of a controllable AC motor having a frequency converter (11), with the frequency converter (11) having an integrated measuring device (12) for the motor current, which integrated measuring device (12) is connected to a control means (3) of the treatment installation (1) for torque control of the brush feed.

2. Treatment installation according to Claim 1, **characterized in that** the control means (3) has a circuit for feeding the treatment brush (brushes) (5, 6, 7) in a torque-dependent manner.

3. Treatment installation according to one of the preceding claims, **characterized in that** the drive motor (10) of the treatment brush (5, 6, 7) is in the form of a controllable three phase motor, in particular in the form of an asynchronous motor.

4. Treatment installation according to one of the preceding claims, **characterized in that** the drive motor (10) is in the form of a gearless three-phase motor for directly driving the treatment brush (5, 6, 7).

5. Treatment installation according to one of the preceding claims, **characterized in that** the integrated measuring devices (12) of a plurality of frequency converters (11) are connected to the control means (3) by means of a bus system (13).

6. Treatment installation according to one of the preceding claims, **characterized in that** the drive motor (10) can be set to different rotation speeds or rotation speed ranges as a function of the brush trim (8).

7. Treatment installation according to one of the preceding claims, **characterized in that** the rotation speed of the drive motor (10) can be changed during the treatment process.

8. Treatment installation according to one of the preceding claims, **characterized in that** the treatment brush (5, 6, 7) has a feed apparatus (14) which can be controlled and is connected to the control means (3).

9. Treatment installation according to one of the preceding claims, **characterized in that** the treatment installation (1) is in the form of a gantry washing installation or a synchronized installation having at least one movable gantry (4) on which a plurality of treatment brushes (5, 6, 7) having drive motors (10) and feed apparatuses (14) are arranged.

10. Treatment installation according to one of Claims 1 to 8, **characterized in that** the treatment installation (1) is in the form of a wash tunnel with at least one stationary and/or movable gantry (4) on which at least one treatment brush (5, 6, 7) having a drive motor (10) and a feed apparatus (14) is arranged.

## Revendications

1. Installation de traitement de véhicules (2), en particulier installation de lavage de voitures ou de polissage, présentant au moins une brosse rotative de traitement alimentable (5, 6, 7) qui est amenée en position de travail sur le véhicule (2) au moyen d'un appareil d'alimentation (14) et un moteur électrique d'entraînement (10) qui entraîne en rotation la brosse de traitement (5, 6, 7),
**caractérisée en ce que** le moteur d'entraînement (10) de la brosse de traitement (5, 6, 7) est configuré comme moteur commandé à courant alternatif doté d'un convertisseur de fréquence (11) et **en ce que** le convertisseur de fréquence (11) présente un dispositif intégré (12) de mesure du courant de moteur, lequel dispositif intégré (12) de mesure est raccordé à une commande (3) de l'installation (1) de traitement pour le contrôle du torque de l'alimentation de la brosse.

2. Installation de traitement de véhicules selon la revendication 1, **caractérisée en ce que** la commande (3) présente un circuit qui ajuste les brosses de traitement (5, 6, 7) en fonction du temps.

3. Installation de traitement de véhicules selon l'une des revendications précédentes, **caractérisée en ce que** le moteur d'entraînement (10) des brosses de traitement (5, 6, 7) est configuré comme moteur commandé à courant tournant, en particulier comme moteur asynchrone.

4. Installation de traitement de véhicules selon l'une des revendications précédentes, **caractérisée en ce que** le moteur d'entraînement (10) est configuré comme moteur à courant alternatif sans transmission qui entraîne directement les brosses de traitement (5, 6, 7).

5. Installation de traitement de véhicules selon l'une des revendications précédentes, **caractérisée en ce que** les dispositifs intégrés (12) de mesure de plusieurs convertisseurs de fréquence (11) sont raccordés à la commande (3) par l'intermédiaire d'un système de bus (13).

6. Installation de traitement de véhicules selon l'une des revendications précédentes, **caractérisée en ce que** le moteur d'entraînement (10) peut être réglé à différentes vitesses de rotation ou plages de vitesse de rotation en fonction de la garniture (8) des brosses.

7. Installation de traitement de véhicules selon l'une des revendications précédentes, **caractérisée en ce que** la vitesse de rotation du moteur d'entraînement (10) peut être modifiée pendant l'opération de traitement.

8. Installation de traitement de véhicules selon l'une des revendications précédentes, **caractérisée en ce que** les brosses de traitement (5, 6, 7) présentent un dispositif de réglage (14) commandé et raccordé à la commande (3).

9. Installation de traitement de véhicules selon l'une des revendications précédentes, **caractérisée en ce que** l'installation (1) de traitement est configure comme installation de lavage à portique ou installation cadencée dotée d'au moins un portique (4) sur lequel plusieurs brosses de traitement (5, 6, 7) dotées de moteurs d'entraînement (10) et de dispositifs d'ajustement (14) sont disposées.

10. Installation de traitement de véhicules selon l'une des revendications 1 à 8, **caractérisée en ce que** l'installation (1) de traitement est configurée comme parcours de lavage doté d'au moins un portique (4) sur lequel au moins une brosse de traitement (5, 6, 7) dotée d'un moteur d'entraînement (10) et d'un dispositif d'ajustement (14) est disposée.
